# EUROPÄISCHE PATENTSCHRIFT

(11) **EP 2 663 573 B1**
(45) Veröffentlichungstag und Bekanntmachung des Hinweises auf die Patenterteilung: **22.06.2016**
(21) Anmeldenummer: 11807920.1
(22) Anmeldetag: 22.12.2011
(51) Int. Cl.: C07F 9/6574

(54) **VERFAHREN ZUR HERSTELLUNG VON BIPHEPHOS**
METHOD FOR PRODUCING BIPHEPHOS
PROCÉDÉ DE PRÉPARATION DE BIPHEPHOS

(30) Priorität: 13.01.2011 DE 102011002639
(43) Veröffentlichungstag der Anmeldung: 20.11.2013
(73) Patentinhaber: Evonik Degussa GmbH, 45128 Essen (DE)
(72) Erfinder: KREIDLER, Burkard, 45219 Essen (DE); FRIDAG, Dirk, 45721 Haltern am See (DE); SCHEMMER, Bernhard, 45721 Haltern am See (DE); WECHSLER, Bjoern, 46325 Borken (DE); CHRISTIANSEN, Andrea, 89231 Neu-Ulm (DE); NEUMANN, Doris, 63069 Offenbach a. M. (DE)
(86) Internationale Anmeldenummer: PCT/EP2011/073762
(87) Internationale Veröffentlichungsnummer: WO 2012/095253

(56) Entgegenhaltungen:
- EP-A1- 0 577 042
- WO-A1-2005/063776

## Beschreibung

Die Erfindung bettrifft ein Verfahren zur Herstellung von 6,6'-[(3,3'-Di-tert-butyl-5,5'-dimethoxy-1,1'-biphenyl-2,2'diyl)bis(oxy)]bis(dibenzo[d,f][1,3,2]dioxaphosphepin), kurz: Biphephos (siehe Formel **1**), mit geringem Chlorgehalt.

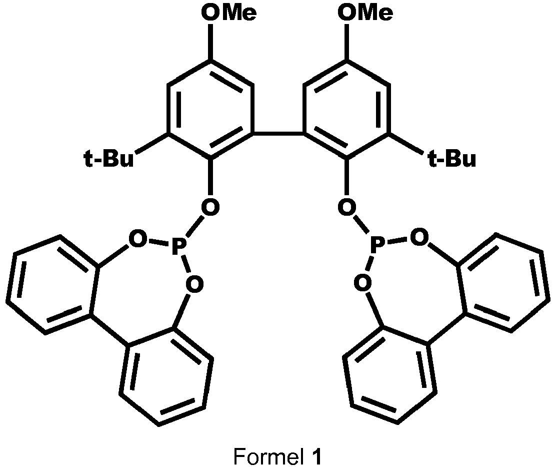

Biphephos ist ein Ligand, der in übergangsmetallkatalysierten Reaktionen verbreitete Verwendung gefunden hat. Biphephos wird beispielsweise in der übergangsmetallkatalysierten Hydroaminomethylierung (E. Petricci, A. Mann, J. Salvadori, M. Taddei, Tetrahedron Letters 2007, 48, 8501-8504), der Hydrocyanierung (US5449807), der Hydroformylierung (US4769498, CN1986055), der Isomerisierung (US5440067) und der Cyclohydrocarbonylierung (US5962744) von Olefinen eingesetzt.

Biphephos wird üblicherweise in 3 Syntheseschritten aus kommerziell verfügbaren Ausgangsmaterialien hergestellt: Zur Herstellung des Rückgrats wird 3-tert-Butyl-4-hydroxyanisol oxidativ zur Biarylverbindung 3,3'-tert-Butyl-2,2'-dihydroxy-5,5'-dimethoxybiphenyl umgesetzt. Zur Herstellung der Seitenflügel wird Phosphortrichlorid mit 2,2'-Dihydroxybiphenyl zur Reaktion gebracht, um 6-Chlorodibenzo[d,f][1,3,2]-dioxaphosphepin (siehe Formel **2**) zu bilden. Schließlich werden die Reaktionsprodukte beider genannter Schritte miteinander in Gegenwart einer Base zu Biphephos kondensiert.

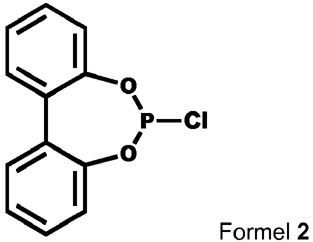

Die umfangreichste Anwendung von Biphephos besteht in der Hydroformylierung von Propen zu n-Butyraldehyd. Dabei wird Propen in Gegenwart von Rhodium als Katalysatormetall und Biphephos als Ligand mit Wasserstoff und Kohlenmonoxid umgesetzt. Für die Reaktion werden im Regelfall Druckreaktoren aus Stahl eingesetzt. Diese Reaktoren sind sehr empfindlich gegenüber Spuren von Chlorwasserstoff, welcher sich aus Chloridionen in Gegenwart von Übergangsmetallen und elementarem Wasserstoff bilden kann. In Gegenwart von Chloridionen droht Spannungsrisskorrosion, welche im günstigeren Fall eine vorzeitige Abstellung und Überholung des Reaktors, im ungünstigsten Fall aber ein Bersten des Reaktors zur Folge haben kann.

Der Eintrag von Chloridionen durch das Olefin oder das Synthesegas kann durch dem Fachmann bekannte Schritte (z. B. Absorberbetten) unterbunden werden. Bei der Zugabe des Katalysatormetalls ist es empfehlenswert, eine chlorfreie Spezies, beispielsweise Rhodiumethylhexanoat oder Rh(acac)(CO)2 einzusetzen.

Da Biphephos letztlich aus PCl₃ gebildet wird, müssen besondere Anstrengungen unternommen werden, um möglichst chlorarmes Biphephos bereitzustellen. Im Falle der Hydroformylierung von Propen sind höhere Chlorgehalte weniger kritisch, da bei den dort erforderlichen Temperaturen nur ein geringer Abbau von Biphephos erfolgt. Bei der Hydroformylierung höherer Olefine sind jedoch im Regelfall höhere Temperaturen erforderlich, die einen beschleunigten Abbau von Biphephos bewirken. Dies bedeutet, dass in einem kontinuierlich laufenden Hydroformylierungsprozess der stetige Abbau von Biphephos durch Nachdosierung von Frisch-Biphephos kompensiert werden muss. Wenn nun Biphephos Spuren an Chlorid enthält, bedeutet das, dass sich Chlorid allmählich im Reaktor akkumuliert, da Chlorid aus dem Reaktor praktisch nicht ausgetragen wird. Mit steigendem Chloridgehalt steigt folglich die Gefahr der Spannungsrisskorrosion erheblich an.

Es ist daher wichtig, einen Herstellungsprozess für Biphephos zu entwickeln, der Biphephos mit geringem Chloridgehalt bereitstellt. Der Chloridgehalt lässt sich analytisch einfach bestimmen, zum Beispiel durch wässrige Titration. Weitreichender ist die Bestimmung des Gesamtchlorgehalts, der neben den Chloriden auch anderweitig gebundenes Chlor umfasst. Ein Abstellen auf den Gesamtchlorgehalt ist auch insoweit sachdienlich, als nicht ausgeschlossen werden kann, dass anderweitig gebundenes Chlor den Reaktor zu schädigen vermag. Bei der Bemessung der Grenzwerte für Gesamtchlor bleibt aber der Chloridanteil maßgeblich. Als äußerster Grenzwert können 5000 ppm Gesamtchlor angesehen werden, bevorzugt sollte das entstehende Biphephos weniger als 4000 ppm, besonders bevorzugt weniger als 3000 ppm Gesamtchlorenthalten. In einem parallel entwickelten Verfahren ist es möglich, den Chlorgehalt weiter zu reduzieren.

Ein geeignetes Verfahren zur Bestimmung des Gesamtchlorgehalts ist die Verbrennung nach Wickbold; mit Probenvorbereitung nach DIN 51408 und Messung per Ionenchromatographie nach DIN EN ISO 10304.

In J. Am. Chem. Soc. 1993, 115, 2066-2068 wurde das bei der Reaktion entstehende Chlorwasserstoffgas mit Triethylamin abgefangen. Die Reaktion erfolgte in Toluol, worin sowohl Biphephos als auch das Koppelprodukt Triethylaminhydrochlorid ausfielen. Es war eine Kühlung auf-40 °C erforderlich. Die Entfernung des entstandenen Hydrochlorids erfolgte durch Waschen mit Wasser, Filtration und Umkristallisation aus Acetonitril. Beim Waschen mit Wasser entsteht eine saure Lösung von Aminhydrochlorid, die spezielle Filtergeräte, beispielsweise aus korrosionsbeständigem Hastelloy, erfordern. Im Übrigen ist Biphephos nur eingeschränkt wasserstabil und kann hydrolysieren, was die geringe Endausbeute von nur 64% erklärt. Je größer ein Ansatz ist, desto länger wird die Kontaktzeit mit Wasser und desto mehr Hydrolyse ist zu erwarten. Eine wässrige Aufarbeitung ist daher bei industriell relevanten Ansatzgrößen nicht zu empfehlen.

In WO2005/063776 wurde die Aufgabe dadurch gelöst, indem als verwendete Aminbase ein polymerer Ionenaustauscher verwendet wurde. Das Aminhydrochlorid ist dort polymer und kann abfiltriert werden. Die Ausbeute betrug 50%. Der beladene Ionenaustauscher muss anschließend entweder in einem separaten Prozessschritt reaktiviert oder aber entsorgt werden.

In Organometallics 1996, 15, 835 - 847 beschreiben van Rooy et al. die Synthese von Biphephos in Tetrahydrofuran als Lösungsmittel in Gegenwart von Pyridin als Base. Als Reaktionstemperatur sind großtechnisch nur mit immensem apparativem und Energieaufwand realisierbare -50 °C angegeben. Der Vorzug dieses Verfahrens liegt jedoch darin, dass das Koppelprodukt Aminhydrochlorid weitgehend ausfällt und durch Filtration von der Biphephoshaltigen Lösung entfernt werden kann. Anschließend muss das Lösungsmittel energieintensiv abgezogen werden. Das Produkt wird durch Zugabe von Acetonitril ausgefällt und erneut filtriert. Die Ausbeute ist gegenüber den beiden obigen Verfahren erheblich verbessert und liegt bei 79%. Nachteile dieses Verfahrens sind: a) Extrem tiefe Temperaturen von -50 °C, die nur mit erheblichem energetischen und apparativem Aufwand erreicht werden können, b) Destillation von THF und Pyridin, welche Energie, die entsprechenden apparativen Voraussetzungen sowie zeitlichen Aufwand erfordert, c) zweifache Filtration, welche arbeitsintensiv ist und Anlagenkapazität in Anspruch nimmt.

Eigene Untersuchungen des Anmelders zeigten weiterhin, dass bei Temperaturen oberhalb von -50 °C verstärkt zu Biphephos isomere Verbindungen, insbesondere ein Isomer der Formel **3,** gebildet wird:

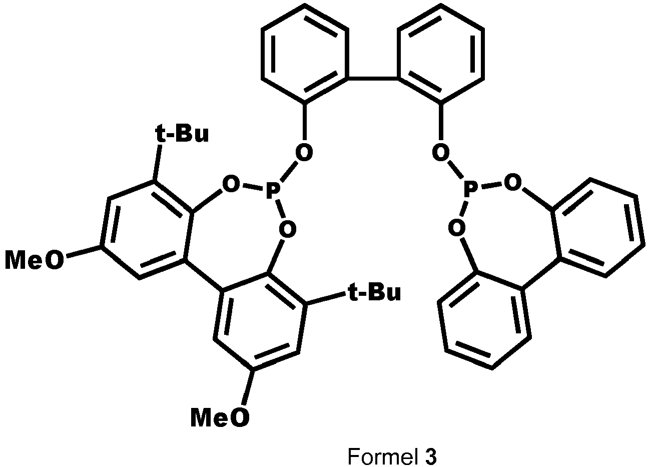

Eine Verbesserung dieses Verfahrens findet sich in EP0577042, wo die Reaktion in Toluol bei - 5 °C durchgeführt wird. Laut EP0577042 fällt hierbei Pyridinhydrochlorid aus, Biphephos hingegen bleibt in Lösung. Anschließend wurde Toluol abdestilliert und Biphephos mit Acetonitril ausgefällt und abdestilliert. Auch hier ist eine zweifache Filtration erforderlich. Weiterhin zeigten eigene Untersuchungen, dass nach dieser Vorschrift nur sehr kleine Ausbeuten im einstelligen Prozentbereich erhalten werden, weil der überwiegende Teil des Biphephos in Toluol ausfällt und zusammen mit Pyridinhydrochlorid abfiltriert und verworfen wird.

Aufgabe der vorliegenden Erfindung war es nun, eine preisgünstige und technisch einfach durchzuführende Synthesemethode für Biphephos zu entwickeln, bei der Biphephos mit einem geringen Gesamtchlorgehalt von weniger als 5000 ppm und in hoher Ausbeute anfällt und bei der auf eine wässrige Aufarbeitung verzichtet werden kann.

Gelöst wird diese Aufgabe durch ein Verfahren zur Herstellung von Biphephos durch Umsetzung von 3,3'-tert-Butyl-2,2'-dihydroxy-5,5'-dimethoxybiphenyl mit 6-Chlorodibenzo[d,f][1,3,2]-dioxaphosphepin, dadurch gekennzeichnet, dass die Umsetzung in einem Acetonitril enthaltenden Lösungsmittelgemisch erfolgt, wobei das Lösungsmittelgemisch mindestens 40 Gew.-% Acetonitril enthält.

Wenn vorliegend von einem "Lösungsmittelgemisch" die Rede ist, so ist damit sowohl ein Gemisch zwei oder mehrerer verschiedener Lösungsmittel gemeint, wobei eines davon Acetonitril ist, als auch reines Acetonitril. In einer bevorzugten Ausführungsform des erfindungsgemäßen Verfahrens enthält das Lösungsmittelgemisch, bevorzugt mindestens 50 Gew.-%, weiter bevorzugt mindestens 60 Gew.-%, noch weiter bevorzugt mindestens 70 Gew.-%, am meisten bevorzugt mindestens 80 Gew.-%, Acetonitril bezogen auf die Gesamtlösungsmittelmenge. Die Umsetzung kann auch in reinem Acetonitril (über 95 bis 100 Gew.-% Acetonitrilanteil im Lösungsmittel) erfolgen.

Das Lösungsmittelgemisch kann bis zu 60 Gew.%, bevorzugt bis zu 50 Gew.-%, weiter bevorzugt bis zu 40 Gew.-%, noch weiter bevorzugt bis zu 30 Gew.-%, am meisten bevorzugt bis zu 20 Gew.-%, bezogen auf die Gesamtlösungsmittelmenge, weitere Lösungsmittel enthalten. Als weitere Lösungsmittel können bevorzugt die aus der Gruppe umfassend Toluol, ortho-Xylol, n-Heptan, Ethylacetat, Propylencarbonat oder Mischungen davon ausgewählt werden, wobei Toluol, ortho-Xylol, n-Heptan, Ethylacetat oder Mischungen davon bevorzugt sind.

In einer bevorzugten Ausführungsform des erfindungsgemäßen Verfahrens erfolgt die Umsetzung in Gegenwart einer Base, bevorzugt in Gegenwart von Pyridin oder n-Butyldimethylamin.

Unter "Lösungsmittel" sollen hier nur die tatsächlich als Lösungsmittel eingesetzten Substanzen verstanden werden, also die bei 23°C flüssigen Bestandteile der Reaktionsmischung, die selbst keine chemische Umsetzung mit den Edukten 3,3'-tert-Butyl-2,2'-dihydroxy-5,5'-dimethoxybiphenyl und 6-Chlorodibenzo[d,f][1,3,2]-dioxaphosphepin und dem Produkt Biphephos eingehen. Zu den Lösungsmitteln zählen also zum Beispiel insbesondere Acetonitril, Toluol, ortho-Xylol, n-Heptan, Ethylacetat und Propylencarbonat. Pyridin, Triethylamin und ähnliche Verbindungen mit basischer Funktion sollen hingegen nicht zu den Lösungsmitteln gezählt werden.

Wie sich zeigte, ist die Herstellung von Biphephos wie oben beschrieben, insbesondere in Gegenwart von Pyridin als Base und in Acetonitril als Lösungsmittel, besonders vorteilhaft. Mit dieser Kombination ist es möglich mit einer einfachen Solekühlung, also oberhalb der Kristallisationstemperatur eines eutektischen Gemisches von Wasser und Kochsalz, 6-Chlorodibenzo[d,f][1,3,2]-dioxaphosphepin **2** mit 3,3'-tert-Butyl-2,2'-dihydroxy-5,5'-dimethoxybiphenyl unter Bildung von Biphephos umzusetzen und das Produkt anschließend abzufiltrieren. Um die Lagerstabilität zu erhöhen, kann man das Produkt optional auch noch mit einem inerten Lösungsmittel, z. B. n-Heptan waschen. Das erhaltene Produkt wird typischerweise mit einer Ausbeute von mehr als 80% erhalten und enthält weniger als 5000 ppm, bevorzugt weniger als 4000 ppm, und besonders bevorzugt weniger als 3000 ppm Chlorid.

Die Verwendung von Pyridin lässt erheblich höhere Temperaturen zu als es mit Triethylamin der Fall ist wie in der von Rooy et al. (vide supra) angewandten Methode. Darüber hinaus ist Pyridinhydrochlorid in Acetonitril, welches als Lösungsmittel für die Synthese verwendet wird, hervorragend löslich und verbleibt im Lösungsmittel während Biphephos in Acetonitril unlöslich ist und daher ausfällt. Dadurch kann Biphephos mit deutlich weniger als 5000 ppm, bevorzugt weniger als 4000 ppm, und besonders bevorzugt weniger als 3000 ppm Gesamtchlor, bezogen auf das isolierte und getrocknete Biphephos, erhalten werden. Bei der Bestimmung des Gesamtchlorgehalts gemäß der Verbrennungsmethode nach Wickbold erfolgt die Probenvorbereitung nach DIN 51408 und die Messung nach DIN EN ISO 10304 (per Ionenchromatographie).

Die Umsetzung kann vorteilhafterweise in einem Temperaturbereich von oberhalb der Kristallisationstemperatur eines eutektischen Gemisches von Wasser und Kochsalz bis zu 10°C durchgeführt werden. In einer bevorzugten Ausführungsform des erfindungsgemäßen Verfahrens erfolgt die Umsetzung in einem Temperaturbereich von größer -10°C bis 5°C.

Nach erfolgter Umsetzung kann der gebildete Feststoff isoliert werden. Dies geschieht typischerweise durch Abfiltrieren und, optional, Trocknen des abfiltrierten Feststoffes. Vorzugsweise wird der abfiltrierte Feststoff - bevor er gegebenenfalls getrocknet wird - erneut in einem dafür geeigneten Lösungsmittel aufgeschlämmt, optional mehrfach in dem selben Lösungsmittel oder mehrfach in verschiedenen geeigneten Lösungsmitteln, und abfiltriert. Geeignete Lösungsmittel zum Aufschlämmen sind Acetonitril, Propylencarbonat, n-Heptan oder Kohlenwasserstoffe. Von den Kohlenwasserstoffen sind die C5-C12-Kohlenwasserstoffe und (Cyclo)-alkane bevorzugt.

Zur weiteren Aufreinigung kann das Biphephos umkristallisiert werden. Dies erfolgt in einer bevorzugten Ausführungsform des erfindungsgemäßen Verfahrens derart, dass nach erfolgter Umsetzung der Edukte, und gegebenenfalls Isolierung des Produktfeststoffes, dieser überwiegend aus Biphephos bestehende Feststoff in einem acetonitrilfreien Lösungsmittel oder Lösungsmittelgemisch bevorzugt unter Erhitzen gelöst wird, unlösliche Bestandteile abfiltriert werden, vorzugsweise bei einer Temperatur bis zu 130 °C abfiltriert werden, und das Biphephos durch Abkühlen des Lösungsmittels oder Lösungsmittelgemisches auskristallisiert oder ausgefällt wird. Anschließend kann das Biphephos isoliert werden, vorzugsweise durch Abfiltrieren und, optional, Trocknen des abfiltrierten reinen Produkts. Das Lösen des überwiegend aus Biphephos bestehenden Feststoffes in einem acetonitrilfreien Lösungsmittel oder Lösungsmittelgemisch kann typischerweise durch Erwärmen des Lösungsmittels bzw. des Lösungsmittelgemisches erfolgen. Anschließend kann dann auf Raumtemperatur oder tiefer abgekühlt werden.

Das oben beschriebene Verfahren ist im Vergleich zu den im Stand der Technik beschriebenen Varianten einfach, mit geringem apparativen, zeitlichen und energetischen Aufwand durchzuführen. Die Vorteile des Verfahrens sind:
- Die Reaktion ist mit einer normalen Solekühlung durchführbar,
- Es können hohe Ausbeuten über 80% erzielt werden,
- Biphephos wird ohne Umkristallisation mit einem Chlorgehalt von weniger als 3000 ppm erhalten, und
- Es findet keine wässrige Aufarbeitung statt.

### Beispiele

### Beispiel 1: Herstellung von Biphephos

In einer Glove-Box wurden in einem 250 mL Schlenkkolben 17,5 g (0,063 mol) Phosphorochloridit **2,** hergestellt nach DE-A102008043584, in 110 mL Acetonitril (Fa. Fluka) vorgelegt. Weiterhin wurden 10,4 g (0,028 mol) 3,3'-tert-Butyl-2,2'-dihydroxy-5,5'-dimethoxybiphenyl, nach EP35965, präpariert. Dieses wurde in 17 ml (16,4 g, 0,204 mol) Pyridin gelöst und in einen 100 mL Tropftrichter gegeben. Dieser wurde auf den Schlenkkolben aufgesetzt. Die Apparatur wurde aus der Glovebox ausgeschleust und der Schlenkkolben auf - 10 °C abgekühlt. Anschließend wurde langsam unter kräftigem Rühren die Biphenol/Pyridin - Lösung tropfenweise innerhalb von 2,5 h zudosiert, wobei ein Feststoff ausfiel. Nach vollständiger Zugabe wurde über Nacht bei -10 °C nachgerührt. Daraufhin wurde der Feststoff über eine G3 Schutzgasfritte abfiltriert. Der Feststoff wurde anschließend auf der Fritte unter Schutzgas in 30 ml Acetonitril aufgeschlämmt und anschließend erneut filtriert. Der farblose Feststoff wurde für 16 Stunden bei 10^-1 mbar getrocknet und anschließend analysiert. Es wurden 19,92 g (87,3% der Theorie) Biphephos erhalten. Dieser enthielt 2500 ppm (± 100 ppm) Gesamtchlor (Analysemethode: Verbrennung nach Wickbold gemäß. DIN 51408 und DIN EN ISO 10304!].

### Beispiel 2: Herstellung von Biphephos

121 g Phosphorochloridit **2,** 80%ig in Toluol, werden in 530 g Acetonitril gelöst und auf -5 °C gekühlt. Weiterhin wurden 63 g 3,3'-tert-Butyl-2,2'-dihydroxy-5,5'-dimethoxybiphenyl in 101 g Pyridin gelöst und langsam zu der Phosphorochloriditlösung zudosiert, wobei die Reaktionslösung ständig auf -5 °C gekühlt wurde. Nach Dosierende wurde 2 h nachgerührt. Das ausgefallene Produkt wurde über eine Nutsche abfiltriert, zunächst mit 80 mL Acetonitril und anschließend mit 100 mL n-Heptan gewaschen und im Vakuumtrockenschrank getrocknet. Es wurden 114 g (83 % der Theorie) Biphephos erhalten mit einem Gesamtchlorgehalt von 1500 ppm (± 100 ppm) (Analysemethode: Verbrennung nach Wickbold gemäß. DIN 51408 und DIN EN ISO 10304).

## Patentansprüche

1. Verfahren zur Herstellung von Biphephos durch Umsetzung von 3,3'-tert-Butyl-2,2'-dihydroxy-5,5'-dimethoxybiphenyl mit 6-Chlorodibenzo[d,f][1,3,2]-dioxaphosphepin, **dadurch gekennzeichnet, dass** die Umsetzung in einem Acetonitril enthaltenden Lösungsmittelgemisch erfolgt, wobei das Lösungsmittelgemisch mindestens 40 Gew.-% Acetonitril enthält.

2. Verfahren nach Anspruch 1, **dadurch gekennzeichnet, dass** das Lösungsmittelgemisch mindestens 50 Gew.-%, weiter bevorzugt mindestens 60 Gew.-%, noch weiter bevorzugt mindestens 70 Gew.-%, am meisten bevorzugt mindestens 80 Gew.-%, Acetonitril enthält.

3. Verfahren nach einem der vorhergehenden Ansprüche, **dadurch gekennzeichnet, dass** das Lösungsmittelgemisch bis zu 60 Gew.-% , bevorzugt bis zu 50 Gew.-%, weiter bevorzugt bis zu 40 Gew.-%, noch weiter bevorzugt bis zu 30 Gew.-%, am meisten bevorzugt bis zu 20 Gew.-%, weitere Lösungsmittel enthält.

4. Verfahren nach Anspruch 3, **dadurch gekennzeichnet, dass** das oder die weiteren Lösungsmittel ausgewählt sind aus der Gruppe umfassend Toluol, ortho-Xylol, n-Heptan, Ethylacetat, Propylencarbonat oder Mischungen davon, wobei Toluol, ortho-Xylol, n-Heptan, Ethylacetat, Propylencarbonat oder Mischungen davon bevorzugt sind.

5. Verfahren nach einem der vorhergehenden Ansprüche, **dadurch gekennzeichnet, dass** die Umsetzung in Gegenwart einer Base, bevorzugt in Gegenwart von Pyridin, erfolgt.

6. Verfahren nach einem der vorhergehenden Ansprüche, **dadurch gekennzeichnet, dass** die Umsetzung in einem Temperaturbereich von oberhalb der Kristallisationstemperatur eines eutektischen Gemisches von Wasser und Kochsalz bis zu +10°C erfolgt.

7. Verfahren nach Anspruch 6, **dadurch gekennzeichnet, dass** die Umsetzung in einem Temperaturbereich von größer -10°C bis +5°C erfolgt.

8. Verfahren nach einem der vorhergehenden Ansprüche, **dadurch gekennzeichnet, dass** nach erfolgter Umsetzung der gebildete Feststoff isoliert wird, vorzugsweise durch Abfiltrieren und, optional, Trocknen des abfiltrierten Feststoffes.

9. Verfahren nach Anspruch 8, **dadurch gekennzeichnet, dass** nach dem Abfiltrieren des Feststoffes dieser erneut in einem dafür geeigneten Lösungsmittel aufgeschlämmt wird, optional mehrfach in dem selben Lösungsmittel oder mehrfach in verschiedenen geeigneten Lösungsmitteln aufgeschlämmt wird, und abfiltriert wird, bevor er gegebenenfalls getrocknet wird.

10. Verfahren nach einem der vorhergehenden Ansprüche, **dadurch gekennzeichnet, dass** nach erfolgter Umsetzung, und gegebenenfalls Isolierung, der überwiegend aus Biphephos bestehende Feststoff in einem acetonitrilfreien Lösungsmittel oder Lösungsmittelgemisch gelöst wird, unlösliche Bestandteile abfiltriert werden und Biphephos durch Abkühlen des Lösungsmittels oder Lösungsmittelgemisches auskristallisiert oder ausgefällt und anschließend isoliert wird, vorzugsweise durch Abfiltrieren und, optional, Trocknen des abfiltrierten Biphephos.

## Claims

1. Process for producing biphephos by reaction of 3,3'-tert-butyl-2,2'-dihydroxy-5,5'-dimethoxybiphenyl with 6-chlorodibenzo[d,f][1,3,2]dioxaphosphepine, **characterized in that** the reaction takes place in a solvent mixture comprising acetonitrile, the solvent mixture comprising at least 40% by weight of acetonitrile.

2. Process according to Claim 1, **characterized in that** the solvent mixture comprises at least 50% by weight, more preferably at least 60% by weight, still more preferably at least 70% by weight, most preferably at least 80% by weight, of acetonitrile.

3. Process according to any of the preceding claims, **characterized in that** the solvent mixture comprises up to 60% by weight, preferably up to 50% by weight, more preferably up to 40% by weight, still more preferably up to 30% by weight, most preferably up to 20% by weight, of other solvents.

4. Process according to Claim 3, **characterized in that** the other solvent(s) has/have been selected from the group consisting of toluene, ortho-xylene, n-heptane, ethyl acetate, propylene carbonate and mixtures thereof, preference being given here to toluene, ortho-xylene, n-heptane, ethyl acetate, propylene carbonate and mixtures thereof.

5. Process according to the preceding claims, **characterized in that** the reaction takes place in the presence of a base, preferably in the presence of pyridine.

6. Process according to any of the preceding claims, **characterized in that** the reaction takes place in the temperature range from above the crystallization temperature of a eutectic mixture of water and sodium chloride up to +10°C.

7. Process according to Claim 6, **characterized in that** the reaction takes place in the temperature range from above -10°C to +5°C.

8. Process according to any of the preceding claims, **characterized in that** when reaction is complete the resultant solid is isolated, preferably being obtained by filtration and, optionally, drying of the solid obtained by filtration.

9. Process according to Claim 8, **characterized in that**, once the solid has been obtained by filtration it is re-slurried in a solvent suitable for this purpose, optionally being repeatedly slurried in the same solvent or repeatedly slurried in various suitable solvents, and is obtained by filtration before optionally being dried.

10. Process according to any of the preceding claims, **characterized in that** when reaction is complete and optionally isolation is complete, the solid mainly composed of biphephos is dissolved in an acetonitrile-free solvent or solvent mixture, insoluble constituents are removed by filtration, and biphephos is crystallized or precipitated via cooling of the solvent or solvent mixture and is then isolated, preferably being obtained by filtration, where the biphephos obtained by filtration is optionally dried.

## Revendications

1. Procédé pour la préparation de Biphephos par transformation de 3,3'-tert-butyl-2,2'-dihydroxy-5,5'-diméthoxybiphényle avec de la 6-chlorodibenzo[d,f][1,3,2]-dioxaphosphépine, **caractérisé en ce que** la transformation a lieu dans un mélange de solvants contenant de l'acétonitrile, le mélange de solvants contenant au moins 40% en poids d'acétonitrile.

2. Procédé selon la revendication 1, **caractérisé en ce que** le mélange de solvants contient au moins 50% en poids, plus préférablement au moins 60% en poids, encore plus préférablement au moins 70% en poids, le plus préférablement au moins 80% en poids, d'acétonitrile.

3. Procédé selon l'une quelconque des revendications précédentes, **caractérisé en ce que** le mélange de solvants contient jusqu'à 60% en poids, de préférence jusqu'à 50% en poids, plus préférablement jusqu'à 40% en poids, encore plus préférablement jusqu'à 30% en poids, le plus préférablement jusqu'à 20% en poids, d'autres solvants.

4. Procédé selon la revendication 3, **caractérisé en ce que** le ou les autres solvants sont choisis dans le groupe comprenant le toluène, l'ortho-xylène, le n-heptane, l'acétate d'éthyle, le carbonate de propylène ou leurs mélanges ; le toluène, l'ortho-xylène, le n-heptane, l'acétate d'éthyle, le carbonate de propylène ou leurs mélanges étant préférés.

5. Procédé selon l'une quelconque des revendications précédentes, **caractérisé en ce que** la transformation a lieu en présence d'une base, de préférence en présence de pyridine.

6. Procédé selon l'une quelconque des revendications précédentes, **caractérisé en ce que** la transformation a lieu dans une plage de température supérieure à la température de cristallisation d'un mélange eutectique d'eau et de chlorure de sodium jusqu'à +10°C.

7. Procédé selon la revendication 6, **caractérisé en ce que** la transformation a lieu dans une plage de température supérieure à -10 jusqu'à +5°C.

8. Procédé selon l'une quelconque des revendications précédentes, **caractérisé en ce que** le solide formé est isolé après la transformation, de préférence par séparation par filtration et éventuellement par séchage du solide séparé par filtration.

9. Procédé selon la revendication 8, **caractérisé en ce qu'**après la séparation par filtration du solide, celui-ci est de nouveau remis en suspension dans un solvant approprié à cette fin, éventuellement plusieurs fois dans le même solvant ou plusieurs fois dans différents solvants appropriés, et est séparé par filtration avant qu'il ne soit le cas échéant séché.

10. Procédé selon l'une quelconque des revendications précédentes, **caractérisé en ce qu'**après la transformation et le cas échéant l'isolement, le solide principalement constitué de Biphephos est dissous dans un solvant ou mélange de solvants exempt d'acétonitrile, les constituants non solubles sont séparés par filtration et le Biphephos est séparé par cristallisation ou par précipitation par refroidissement du solvant ou du mélange de solvants et ensuite isolé, de préférence par séparation par filtration et, éventuellement, par séchage du Biphephos séparé par filtration.
